# EUROPEAN PATENT SPECIFICATION

(11) **EP 2 350 218 B1**
(45) Date of publication and mention of the grant of the patent: **02.08.2017**
(21) Application number: 09744323.8
(22) Date of filing: 06.10.2009
(51) Int. Cl.: C09J 5/00

(54) **PROVISION OF INSERTS**
BEREITSTELLUNG VON EINSÄTZEN
FOURNITURE D'INSERTS

(30) Priority: 09.10.2008 GB 0818498
(43) Date of publication of application: 03.08.2011
(73) Proprietor: Zephyros Inc., Romeo, MI 48065 (US)
(72) Inventor: BLANCANEAUX, John, F-67129 Molsheim Cedex (FR); MEYER, Fracis, F-67129 Molsheim Cedex (FR)
(74) Representative: Wolff, Felix
(86) International application number: PCT/EP2009/007157
(87) International publication number: WO 2010/040499

(56) References cited:
- EP-A- 1 356 911
- EP-A- 1 607 204
- WO-A-2005/058573
- WO-A-2007/117663
- WO-A-2008/016889
- WO-A-2009/058295
- US-A1- 2003 099 826
- US-A1- 2003 184 121
- US-A1- 2004 131 840

## Description

The present invention relates to the provision of inserts in articles of manufacture. In particular the invention relates to providing inserts in panels such as the panels used in the construction, automobile and aircraft industries. It is often necessary to provide inserts in articles of manufacture perhaps to allow for attachment of products such as hinges, chips, locks or identification plates. For example it may be necessary to provide a threaded insert that is capable of receiving a screw to enable a hinge to be attached to the article via the insert. The invention is particularly useful in the construction, automobile and aircraft industries particularly in providing inserts that enable the attachment of components to honeycomb panels such as the panels that are used in the interior of aerospace vehicles. These panels are typically used as flooring, storage compartment doors or internal walls of the aerospace vehicle.

Traditionally inserts are provided by drilling a cavity for the insert, inserting the insert into the cavity, injecting a glue around the insert within the cavity, allowing the glue to harden and removing any excess glue. The process is sometimes operated manually using a gun for the injection of the glue. Typically the insert is provided with a removable cover for centering the insert in the cavity; the cover being provided for injection of the glue and egress of excess glue. The process is therefore labour intensive and not always accurately implemented.

It will be appreciated that many inserts can be required in a simple panel. For example, two or more hinges, a latch and an identifier may be attached to a panel.

The present invention therefore provides a honeycomb structure containing an insert according to claim 1 as well as a process for the attachment of a component to a honeycomb structure according to claim 7. Advantageous embodiments are specified in the dependent claims. The insert of the present invention may be placed within the cavity where it is to be located and the adhesive may be activated to develop adhesive properties. In this way the adhesive may be activated to securely bond the insert at the required location within the cavity in the article of manufacture.

The adhesive is foamable and is heat activated. According to the present invention, the adhesive is foamed by the action of heat and preferably the adhesive foams and develops adhesive properties during the same heating cycle. In this way the article of manufacture with the insert in place may be heated to expand the adhesive to fill any gap between the insert and the interior walls of the cavity within which it is located and at the same time develop adhesive properties to bond the insert to the interior walls of the cavity. Alternatively the adhesive may be activated at ambient temperature, in this embodiment it is preferred that the insert provided with the adhesive be stored at a temperature below that at which the adhesive is activated. In this way during storage the adhesive will be inactive and/or dry to the touch. Typically storage temperatures from -18°C to 10°C may be used.

Although not essential it is preferred that the adhesive be dry to the touch and not tacky at room temperature.

In a further embodiment the insert may be provided with a releasable cover or attachment which extends beyond the upper end of the insert. The upper end being the end that resides at the opening of the cavity once the insert is located within the cavity. The cover or attachment extends beyond the extremities of the upper end of the insert so that it can interact with the perimeter of the cavity to locate the insert within the cavity. After activation of the adhesive so that the insert is securely held within the cavity the cover or attachment may be removed to expose, for example, a screw thread within the insert for the attachment of a hinge, a lock, a clip, an identifier or other similar attachment.

The heat activated expandable adhesive is preferably non tacky to the touch at room temperature and it is preferred that it is a material that can be heat activated to both expand and develop adhesive properties. In a preferred embodiment of the invention inserts are secured in honeycomb panels by an expandable adhesive which will expand and develop adhesive properties. In the production of panels having a honeycomb core and facing panels layers are assembled and the panel manufactured by subjecting the structure to temperatures in the range 80°C to 200°C typically 100°C to 200°C more typically 120°C to 160°C. The duration of the heating will vary according to the temperature employed, the materials used and the heating techniques. In honeycomb panel manufacture the heating may for up to 30 minutes typically up to ten minutes in a press, alternatively the structure may be heated in an oven for several hours such as from ½ to 4 hours.

The expandable adhesive may be provided on the insert by any suitable means. It may be manually assembled, moulded onto the insert, it may be extruded onto the insert or it may be provided by means of a mini-applicator.

As used herein, activatable means that the material foams and softens (e.g, melts), and cures, or it may be provided by means of a mini applicator or a combination thereof upon exposure to a condition or upon the combination of particular chemicals (e.g., 2-component materials). Typically, the material, upon activation, will wet, and bond to the adjacent surface of the article of manufacture such as the expandable material and it may be a thermoplastic, a thermoset or a blend thereof. According to a preferred embodiment, the material is a structural foam which cures to a rigid structure such as an epoxy-containing material, an ethylene-containing polymer, an acetate or acrylate containing polymer, or a mixture thereof, which when compounded with appropriate ingredients (typically a blowing agent, a curing agent, and perhaps a filler), typically expands, cures or both in a reliable and predictable manner upon the application of heat or another activation stimulus. Thus, according to one embodiment, an exemplary material may be a heat-activated and/or epoxy- based resin having foamable characteristics. After curing, the material typically becomes a thermoset material that is fixed and incapable of any substantial flow. Examples of preferred formulations that are commercially available include those available from L&L Products, Inc. of Romeo, Michigan, under the designations L-0502, L-0504, L- 1066, L-2105, L-2190 L-2663, L-5204, L-5206, L-5207, L-5208, L-5214, L- 5218, L-5222, L-5248, L-6000, L-7102, L-7220, L-8000, L-8100, L-8110, L- 8115, L-9000 or combinations thereof. It is also contemplated that the material may have a fiberglass or other fabric material integrated to one or more sides of the material and/or within the material.

After activation of the adhesive material, it is preferable, although not required, for the material (e.g., foam) to have relatively high strength. Where the material also foams, the activated and foamed material will typically have a compressive modulus that is greater than about 100 MPa, more typically greater than about 300 MPa and even more typically greater than about 550 MPa (e.g., about 614 MPa) when testing is done in accordance with ASTM D-695. The activated material will also typically have a compressive strength of greater than about 700 psi, more typically greater than 1500 psi and even more particularly greater than 2000 psi when testing is done in accordance with ASTM D-695. Activatable materials having one or any combination of the aforementioned properties have been formulated and it has been found that admixtures having particular ingredients or features are particularly desirable. Percentages herein refer to weight percent, unless otherwise indicated.

The activatable or expandable material typically includes one or more polymeric materials, which may include a variety of different polymers, such as thermoplastics, elastomers, plastomers and combinations thereof or the like. For example, and without limitation, polymers that might be appropriately incorporated into the polymeric admixture include halogenated polymers, polycarbonates, polyketones, urethanes, polyesters, silanes, sulfones, allyls, olefins, styrenes, acrylates, methacrylates, epoxies, silicones, phenolics, rubbers, polyphenylene oxides, terphthalates, acetates (e.g., EVA), acrylates, methacrylates (e.g., ethylene methyl acrylate polymer) or mixtures thereof. Other potential polymeric materials may be or may include, without limitation, polyolefin (e.g., polyethylene, polypropylene) polystyrene, polyacrylate, poly(ethylene oxide), poly(ethyleneimine), polyester, polyurethane, polysiloxane, polyether, polyphosphazine, polyamide, polyimide, polyisobutylene, polyacrylonitrile, polyvinyl chloride), poly(methyl methacrylate), polyvinyl acetate), poly(vinylidene chloride), polytetrafluoroethylene, polyisoprene, polyacrylamide, polyacrylic acid, polymethacrylate.

The polymeric admixture can comprise up to 85% by weight or greater of the activatable material. Preferably, the polymeric admixture comprises about 0.1 % to about 85%, more preferably about 1 % to about 70% by weight of the activatable material.

Epoxy resin is used herein to mean any of the conventional dimeric, oligomeric or polymeric epoxy materials containing at least one epoxy functional group. The polymer-based materials may be epoxy containing materials having one or more oxirane rings polymerizable by a ring opening reaction. It is contemplated that the activatable material can include up to about 80 % of an epoxy resin or more. Typically, the activatable material includes between about 5 % and 60% by weight epoxy resin and still more typically between about 10 % and 30 % by weight epoxy resin.
The epoxy may be aliphatic, cycloaliphatic, aromatic or the like. The epoxy may be supplied as a solid (e.g., as pellets, chunks, pieces or the like) or a liquid (e.g., an epoxy resin). The epoxy may include an ethylene copolymer or terpolymer that may possess an alpha-olefin. As a copolymer or terpolymer, the polymer is composed of two or three different monomers, i.e., small molecules with high chemical reactivity that are capable of linking up with similar molecules. Preferably, an epoxy resin is added to the activatable material to increase adhesion properties of the material. One exemplary epoxy resin may be a phenolic resin, which may be a novalac type or other type resin. Other preferred epoxy containing materials may include a bisphenol-A epichlorohydrin ether polymer, or a bisphenol-A epoxy resin which may be modified with butadiene or another polymeric additive.

Activatable materials of the present invention, can include a substantial amount of elastomeric or rubber material, which can be one elastomer or a mixture of several different elastomers. When used, the elastomeric material is typically at least about 5%, more typically at least about 14%, even more typically at least 25% by weight of the activatable material and the elastomeric material is typically less than about 65%, more typically less than about 45% and even more typically less than about 35% by weight of the activatable material.

Rubbers and elastomers suitable for the elastomeric material include, without limitation, natural rubber, styrene-butadiene rubber, polyisoprene, polyisobutylene, polybutadiene, isoprene-butadiene copolymer, neoprene, nitrile rubber (e.g., a butyl nitrile, such as carboxy-terminated butyl nitrile), butyl rubber, polysulfide elastomer, acrylic elastomer, acrylonitrile elastomers, silicone rubber, polysiloxanes, polyester rubber, diisocyanate-linked condensation elastomer, EPDM (ethylene-propylene dle[eta]e monomer rubbers), chlorosulphonated polyethylene, fluorinated hydrocarbons and the like. Particularly preferred elastomers are EPDMs sold under the tradename VISTALON 7800 and 2504, commercially available from Exxon Mobil Chemical. Another preferred elastomer is a polybutene isobutylene butylenes copolymer sold under the tradename H-1500, commercially available from BP Amoco Chemicals. Elastomer-containing Adduct

An elastomer-containing adduct can also be employed in the activatable material of the present invention such as an epoxy/elastomer adduct. The epoxy/elastomer hybrid or reaction product may be included in an amount of up to about 80 % by weight of the activatable material or more. More typically, the elastomer-containing adduct, when included, is approximately 20 to 80%, and more preferably is about 30 % to 70% by weight of the activatable material. In turn, the adduct itself generally includes about 1:5 to 5:1 parts of epoxy to elastomer, and more preferably about 1:3 to 3:1 parts of epoxy to elastomer. The elastomer compound may be a thermosetting or other elastomer. Exemplary elastomers include, without limitation natural rubber, styrene-butadiene rubber, polyisoprene, polyisobutylene, polybutadiene, isoprene-butadiene copolymer, neoprene, nitrile rubber (e.g., a butyl nitrite, such as carboxy-terminated butyl nitrile), butyl rubber, polysulfide elastomer, acrylic elastomer, acrylonitrile elastomers, silicone rubber, polysiloxanes, polyester rubber, diisocyanate-linked condensation elastomer, EPDM (ethylene-propylene diene rubbers), chlorosulphonated polyethylene, fluorinated hydrocarbons and the like. In one embodiment, recycled tire rubber is employed.

The elastomer-containing adduct, when added to the activatable material, preferably is added to modify structural properties of the material such as strength, toughness, stiffness, flexural modulus, or the like. Additionally, the elastomer-containing adduct may be selected to render the activatable material more compatible with coatings such as water-borne paint or primer system or other conventional coatings.

One or more blowing agents may be added to the activatable material. Such blowing agents assist in forming cellular or foamed activated materials, which typically have a lower density and/or weight.

The blowing agent may be a physical blowing agent or a chemical blowing agent. For example, the blowing agent may be a thermoplastic encapsulated solvent that expands upon exposure to a condition such as heat. Alternatively, the blowing agent may chemically react to liberate gas upon exposure to a condition such as heat or humidity or upon exposure to another chemical reactant.

The blowing agent may include one or more nitrogen containing groups such as amides, amines and the like. Examples of suitable blowing agents include azodicarbonamide, dinitrosopentamethylenetetramine,4,4j-oxy-bis-(benzenesulphonylhydrazide), trihydrazinotriazine and N, Nj-dimethyl-N,Nj- dinitrosoterephthalamide.

An accelerator for the blowing agents may also be provided in the activatable material. Various accelerators may be used to increase the rate at which the blowing agents form inert gasses. One preferred blowing agent accelerator is a metal salt, or is an oxide, e.g. a metal oxide, such as zinc oxide. Other preferred accelerators include modified and unmodified thiazoles or imidazoles, ureas or the like. Amounts of blowing agents and blowing agent accelerators can vary widely within the activatable material depending upon the type of cellular structure desired, the desired amount of expansion of the expandable material, the desired rate of expansion and the like. Exemplary ranges for the amounts of blowing agents and blowing agent accelerators in the activatable material range from about 0.001 % by weight to about 5 % by weight.

One or more curing agents and/or curing agent accelerators may be added to the activatable material. Amounts of curing agents and curing agent accelerators can, like the blowing agents, vary widely within the activatable material depending upon the type of cellular structure desired, the desired amount of expansion of the activatable material, the desired rate of expansion, the desired structural properties of the activatable material and the like. Exemplary ranges for the curing agents or curing agent accelerators present in the activatable material range from about 0.00 1% by weight to about 7 % by weight.

Typically, the curing agents assist the activatable material in curing by crosslinking of the polymers, epoxy resins or both. It can also be desirable for the curing agents to assist in thermosetting the activatable material. Useful classes of curing agents are materials selected from aliphatic or aromatic amines or their respective adducts, amidoamines, polyamides, cycloaliphatic amines, (e.g., anhydrides, polycarboxylic polyesters, isocyanates, phenol- based resins (such as phenol or cresol novolak resins, copolymers such as those of phenol terpene, polyvinyl phenol, or bisphenol-A formaldehyde copolymers, bishydroxyphenyl alkanes or the like), sulfur or mixtures thereof. Particular preferred curing agents include modified and unmodified polyamines or polyamides such as triethylenetetramine, diethylenetriamine tetraethylenepentamine, cyanoguanidine, dicyandiamides and the like. An accelerator for the curing agents (e.g., a modified or unmodified urea such as methylene diphenyl bis urea, an imidazole or a combination thereof) may also be provided for preparing the activatable material. Other example of curing agent accelerators include, without limitation, metal carbamates (e.g., copper dimethyl dithio carbamate, zinc dibutyl dithio carbamate, combinations thereof or the like), disulfides (e.g., dibenzothiazole disulfide)

Though longer curing times are also possible, curing times of less than 5 minutes, and even less than 30 seconds are possible for the formulation of the present invention. Moreover, such curing times can depend upon whether additional energy (e.g., heat, light, radiation) is applied to the material or whether the material is cured at room temperature.

As suggested, faster curing agents and/or accelerators can be particularly desirable for shortening the time between onset of cure and substantially full cure (i.e., at least 90% of possible cure for the particular activatable material) and curing the activatable material while it maintains its self supporting characteristics. As used herein, onset of cure is used to mean at least 3% but no greater than 10% of substantially full cure. For the present invention, it is generally desirable for the time between onset of cure and substantially full cure to be less than about 30 minutes, more typically less than about 10 minutes and even more typically less than about 5 minutes and still more typically less than one minute. It should be noted that more closely correlating the time of softening of the polymeric materials, the time of curing and the time of bubble formation or blowing can assist in allowing for activation of the expandable material without substantial loss of its self supporting characteristics. Generally, it is contemplated that experimentation by the skilled artisan can produce desirable cure times using various of the curing agents and/or accelerators discussed above or others. It has been found that for a dicyanamide curing agent or other agents used for cure during activation, other curing agents or accelerators such as a modified polyamine (e.g., cycloaliphatic amine) sold under the tradename ANCAMINE 2441 or 2442 or 2014 AS; an imidazole (e.g., 4-Diamino-6[2'-methylimidazoyl- (I ')ethyl-s-triazine isocyanuric) sold under the tradename CUREZOL 2MA- OK; an amine adduct sold under the tradename PN-23, an adipic hydrazide sold under the tradename ADH all commercially available from Air Products or an adduct of imidazole and isocyanate sold under the tradename LC-65 and commercially available from A & C Catalyst can produce particularly desirable cure times.

Also as suggested previously, the activatable material can be formulated to include a curing agent that at least partially cures the activatable material prior to activation of the material. Preferably, the partial cure alone or in combination with other characteristics or ingredients of the activatable material imparts sufficient self supporting characteristics to the activatable material such that, during activation and/ or foaming, the activatable material, expands volumetrically without significantly losing it shape or without significant flow in the direction or gravity.

In one embodiment, the activatable material includes a first curing agent and, optionally, a first curing agent accelerator and a second curing agent and, optionally, a second curing agent accelerator, all of which are preferably latent. The first curing agent and/or accelerator are typically designed to partially cure the activatable material during processing (e.g., processing, mixing, shaping or a combination thereof) of the activatable material for at least assisting in providing the activatable material with the desirable self supporting properties. The second curing agent and/or accelerator will then typically be latent such that they cure the activatable material upon exposure to a condition such as heat, moisture or the like.

As one preferred example of this embodiment, the second curing agent and/or accelerator are latent such that one or both of them cure the polymeric materials of the expandable material at a second or activation temperature or temperature range. However, the first curing agent and/or accelerator are also latent, but either or both of them partially cure the expandable material upon exposure to a first elevated temperature that is below the second or activation temperature. The first temperature and partial cure will typically be experienced during material mixing, shaping or both. For example, the first temperature and partial cure can be experienced in an extruder that is mixing the ingredient of the activatable material and extruding the activatable material through a die into a particular shape. As another example, the first temperature and partial cure can be experienced in a molding machine (e.g., injection molding, blow molding compression molding) that is shaping and, optionally, mixing the ingredients of the expandable material.

The second or activation temperature and substantially full cure can then occur at a temperature experienced during processing of the article of manufacture to which the activatable material has been applied. For example, in the automotive industry, e-coat and paint ovens can provide activation temperatures. Typically, it is desirable for the activatable material to additionally expand (e.g., foam) as well as cure at the activation temperature as is described more in detail further below. Partial cure can be accomplished by a variety of techniques. For example, the first curing agent and/or accelerator may be added to the expandable material in sub-stoichiometric amounts such that the polymeric material provides substantially more reaction sites than are actually reacted by the first curing agent and/or accelerator. Preferred sub-stoichiometric amounts of first curing agent and/or accelerator typically cause the reaction of no more than 60%, no more than 40% or no more than 30%, 25% or even 15% of the available reaction sites provided by the polymeric material. Alternatively, partial cure may be effected by providing a first curing agent and/or accelerator that is only reactive for a percentage of the polymeric material such as when multiple different polymeric materials are provided and the first curing agent and/or accelerator is only reactive with one or a subset of the polymeric materials. In such an embodiment, the first curing agent and/or accelerator is typically reactive with no more than 60%, no more than 40% or no more than 30%, 25% or even 15% by weight of the polymeric materials.

In another embodiment, the activatable material may be formed using a two component system that partially cures upon intermixing of the first component with the second component. In such an embodiment, a first component is typically provided with a first curing agent, a first curing agent accelerator or both and the second component is provided with one or more polymeric materials that are cured (e.g., cross-linked) by the curing agent and/or accelerator upon mixing of the first and second component. Such mixing will typically take place at a temperature below 80°C (e.g., around room temperature or from about 10°C to about 30°C).

Like the previous embodiments, the partial cure, alone or in combination with other characteristics or ingredients of the activatable material, imparts sufficient self supporting characteristics to the activatable material such that, during activation and/ or foaming, the activatable material, doesn't experience substantial flow in the direction of gravity. Also like the previous embodiments, partial cure, upon mixing may be effected by a variety of techniques. For example, the first curing agent and/or accelerator may, upon mixing of the first component and second component, be present within the activatable material in sub-stoichiometric amounts such that the polymeric materials provide substantially more reaction sites than are actually reacted by the first curing agent and/or accelerator. Preferred sub-stoichiometric amounts of first curing agent and/or accelerator typically cause the reaction of no more than 60%, no more than 40% or no more than 30%, 25% or even 15% of the available reaction sites provided by the polymeric material. Alternatively, partial cure may be effected by providing a first curing agent and/or accelerator that is only reactive for a percentage of the polymeric material such as when multiple different polymeric materials are provided and the first curing agent and/or accelerator is only reactive with one or a subset of the polymeric materials. In such an embodiment, the first curing agent and/or accelerator is typically capable of reaction with no more than 60%, no more than 40% or no more than 30%, 25% or even 15% by weight of the polymeric material.

The other ingredients (i.e., the additional polymeric materials, filler, other additives, the blowing agents and/or accelerators or the like) of the activatable material may be part of the first or second components of the two component system or may be added separately. Typically, the other additional ingredients will be split between the components in a manner that allows for reasonably thorough mixing of the first component with the second component. Generally, this will help the activatable material to be substantially homogeneous.

The activatable material may also include one or more fillers, including but not limited to particulated materials (e.g., powder), beads, microspheres, or the like. Preferably, the filler includes a relatively low-density material that is generally non-reactive with the other components present in the activatable material.

Examples of fillers include silica, diatomaceous earth, glass, clay, talc, pigments, colorants, glass beads or bubbles, glass, carbon ceramic fibers, antioxidants, and the like. Such fillers, particularly clays, can assist the activatable material in leveling itself during flow of the material. The clays that may be used as fillers may include clays from the kaolinite, illite, chloritem, smecitite or sepiolite groups, which may be calcined. Examples of suitable fillers include, without limitation, talc, vermiculite, pyrophyllite, sauconite, saponite, nontronite, montmorillonite or mixtures thereof. The clays may also include minor amounts of other ingredients such as carbonates, feldspars, micas and quartz. The fillers may also include ammonium chlorides such as dimethyl ammonium chloride and dimethyl benzyl ammonium chloride. Titanium dioxide might also be employed. In one preferred embodiment, one or more mineral or stone type fillers such as calcium carbonate, sodium carbonate or the like may be used as fillers. In another preferred embodiment, silicate minerals such as mica may be used as fillers. It has been found that, in addition to performing the normal functions of a filler, silicate minerals and mica in particular improved the impact resistance of the cured activatable material.

When employed, the fillers in the activatable material can range from 10 % to 90 % by weight of the activatable material. According to some embodiments, the activatable material may include from about 0.001 % to about 30 % by weight, and more preferably about 10 % to about 20 % by weight clays or similar fillers. Powdered (e.g. about 0.01 to about 50, and more preferably about 1 to 25 micron mean particle diameter) mineral type filler can comprise between about 5 % and 70 % by weight, more preferably about 10 % to about 20%, and still more preferably approximately 13 % by weight of the activatable material.

It is contemplated that one of the fillers or other components of the material may be thixotropic for assisting in controlling flow of the material as well as properties such as tensile, compressive or shear strength. Such thixotropic fillers can additionally provide self supporting characteristics to the activatable material. Examples of thixotropic fillers include, without limitation, silica, calcium carbonate, clays, aramid fiber or pulp or others. One preferred thixotropic filler is synthetic amorphous precipitated silicon dioxide.

Typically, the activatable material will include one or more fire retardants, although not required. Useful flame retardants for the activatable material includes, halogenated polymers, other halogenated materials, materials (e.g., polymers) including phosphorous, bromine, chlorine, bromine, oxide, combinations thereof or the like. Exemplary flame retardants include, without limitation, chloroalkyl phosphate, dimethyl methylphosphonate, bromine-phosphorus compounds, ammonium polyphosphate, neopentylbromide polyether, brominated polyether, antimony oxide, calcium metaborate, chlorinated paraffin, brominated toluene, hexabromobenzene, antimony trioxide, graphite (e.g., expandable graphite), combinations thereof or the like.

When used, the fire retardant can be a fairly substantial weight percentage of the activatable material. The fire retardant[s] can comprise greater than 2%, more typically greater than 12%, even more typically greater than 25% and even possibly greater than 35% by weight of the activatable material.

Other additives, agents or performance modifiers may also be included in the expandable material as desired, including but not limited to a UV resistant agent, a flame retardant, an impact modifier, a heat stabilizer, a UV photoinitiator, a colorant, a processing aid, a lubricant, a reinforcement (e.g., chopped or continuous glass, ceramic, aramid, or carbon fiber or the like).

Activatable materials of the present invention will typically include an adhesion promoter, which may be one or a mixture of multiple components. When used, the adhesion promoter is typically at least about 1 %, more typically at least about 4%, even more typically at least 8% by weight of the activatable material and the elastomeric material is typically less than about 30%, more typically less than about 20% and even more typically less than about 15% by weight of the activatable material. Various adhesion promoters can be employed including, without limitation, epoxy materials, acrylates, hydrocarbon resins or the like. One particularly preferred adhesion promoter is a hydrocarbon resin sold under the tradename SUPER NEVTAC 99, commercially available from Neville Chemical Company. Another particularly preferred adhesion promoter is an aromatic hydrocarbon resin sold under the tradename HIKOTACK P-90S, commercially available from Kolon Chemical.

Activatable materials of the present invention will typically include processing oil, which may be one or a mixture of multiple oils. One particularly preferred processing oil is refined petroleum oil sold under the tradename SENTRY 320, commercially available from Citgo oil. When used such oils can be present in the activatable material from about 1 % to about 25% by weight, but may be used in higher or lower quantities.

According to the present invention, the insert is provided in a honeycomb structure which is the article of manufacture. Honeycomb structures may comprise panels consisting of a honeycomb core provided with two facing sheets. In this instance the honeycomb may be of paper, fabric, plastic or metal such as a metallic grid which maybe of aluminum and similarly the facing may be of paper, plastic, carbon or glass fibre or metal or more preferably fibre reinforced thermosetting resin such as glass filled epoxy Prepreg.

In a preferred embodiment the article of manufacture is a panel particularly a panel used in the construction, automobile or the aerospace industries including panels used in the interior of aircraft and the insert is used to enable attachment of a component such as a hinge, a clip, a handle, a stud, a plug, a lock or an identification tag to the article.

The present invention is illustrated by reference to the accompanying figures in which
Figure 1 shows a typical insert provided with a releasable cover.
Figure 2 shows the insert of Figure 1 in a cavity in a honeycomb structure.
Figure 3 shows how, according to the conventional process glue is injected into the cavity and the insert to provide the insert as shown in Figure 4 when the releasable cover can be removed to expose the screw thread of the insert as shown in Figure 5.
Figure 6 shows an insert of the present invention previously provided with the activatable adhesive which may conveniently be activated and foamed to produce a structure similar to that shown in Figure 5.
Figure 7 shows how in one embodiment of the present invention the releasable cover may not be required.

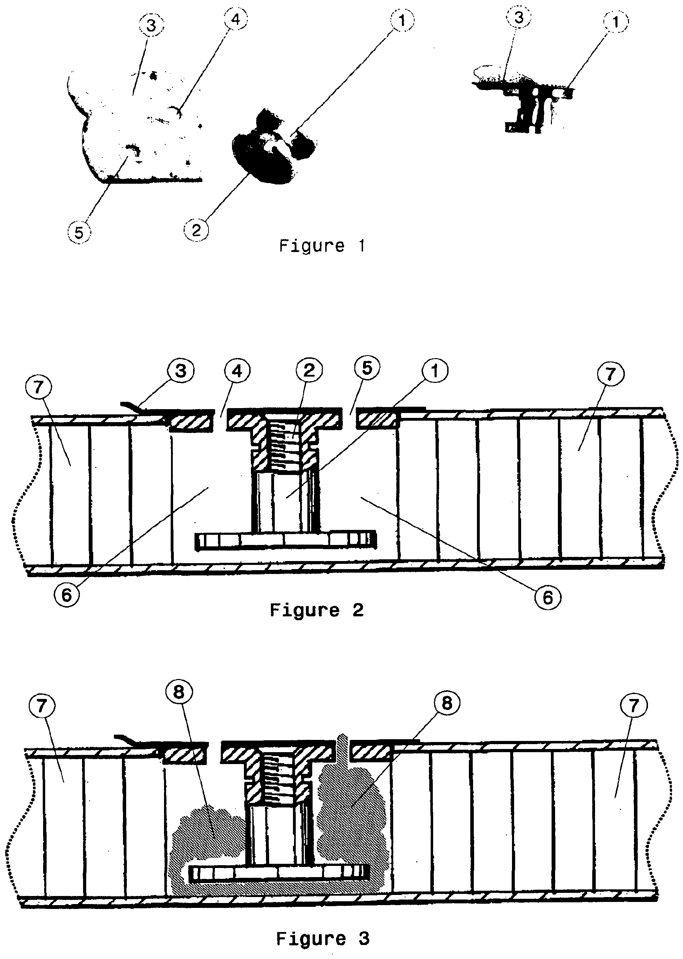

Figure 1 shows a metal insert (1) provided with an internal thread (2) and a releasable cover (3). The cover is provided with two holes (4) and (5) for the injection of adhesive and the egress of any excess adhesive.

Figure 2 shows the insert of Figure 1 placed within a cavity (6) in a honeycomb structure (7).

Figure 3 shows how, according to the conventional methods, an adhesive (8) may be injected into the cavity (6) to fill it and bond the insert (1) to the honeycomb structure (7).

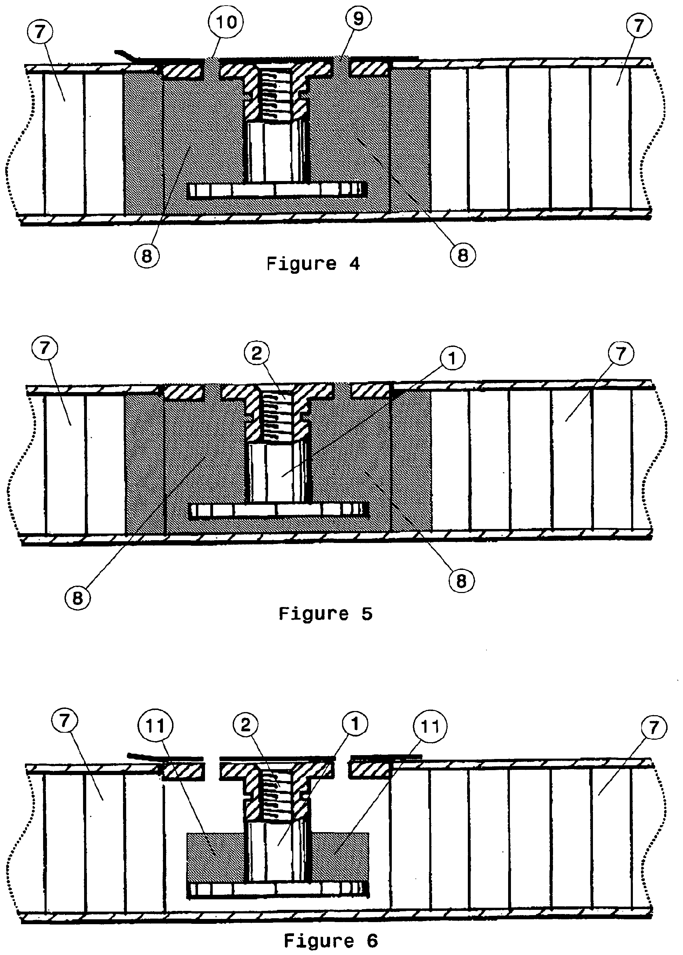

Figure 4 shows how the adhesive protrudes slightly beyond the releasable cover at (9) and (10).

Figure 5 shows how the cover (3) and the protrusions (9) and (10) need to be removed to provide the article with the insert securely bonded with it's surface being flush and aesthetically acceptable.

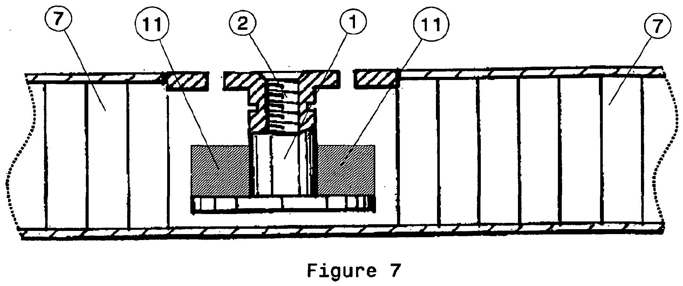

Figures 6 and 7 show an insert of the invention (1) previously provided with an adhesive (11) which can be activated to fill the cavity and bond the insert to the cavity.

Figure 6 shows an insert of the invention provided with a releasable cover to position the insert within the cavity and Figure 7 shows that the releasable cover may not be required.

## Claims

1. A honeycomb structure containing an insert within a cavity formed in the honeycomb structure and adapted to enable the attachment of a component to the honeycomb structure wherein the insert is secured to the interior walls of the cavity in the honeycomb structure by a foam provided by a heat activated adhesive provided on the insert.

2. A honeycomb structure according to Claim 1 in which the insert is provided with a releasable cover or attachment.

3. A honeycomb structure according to Claim 1 or Claim 2 in which the insert has a threaded bore.

4. A honeycomb structure according to any of the preceding claims in which the adhesive is a thermoplastic, a thermoset or a blend thereof.

5. A honeycomb structure according to Claim 4 in which the adhesive is a structural foam.

6. A honeycomb structure according to Claim 5 in which the structural foam is an epoxy-containing material.

7. A process for the attachment of a component to a honeycomb structure comprising forming a cavity in the honeycomb structure placing an insert adapted to enable the attachment of the component to the honeycomb structure within the cavity said insert carrying an foamable adhesive activatable by heat and activating the adhesive by heating to cause the adhesive to foam and bond the insert to the interior walls of the cavity and attaching the component to the insert.

8. A process according to Claim 7 in which the adhesive is dry to the touch and not tacky at room temperature.

9. A process according to Claim 7 or Claim 8 in which prior to placing the insert in the cavity it is stored at a temperature in the range - 18°C to 10°C.

10. A process according to any of Claims 7 to 9 in which the insert is provided with a releasable cover which is removed to enable attachment of the component to the insert.

## Patentansprüche

1. Wabenstruktur, die einen Einsatz in einem Hohlraum enthält, der in der Wabenstruktur gebildet ist, und ausgestaltet ist, um die Befestigung einer Komponente an der Wabenstruktur zu ermöglichen, wobei der Einsatz an den Innenwänden des Hohlraums in einer Wabenstruktur durch einen Schaum gesichert ist, die durch einen auf dem Einsatz bereitgestellten wärmeaktivierten Klebstoff bereitgestellt wird.

2. Wabenstruktur nach Anspruch 1, wobei der Einsatz mit einer lösbaren Abdeckung oder Befestigung ausgestattet ist.

3. Wabenstruktur nach Anspruch 1 oder Anspruch 2, wobei der Einsatz eine Gewindebohrung aufweist.

4. Wabenstruktur nach einem der vorhergehenden Ansprüche, wobei der Klebstoff ein Thermoplast, ein Duroplast oder ein Gemisch davon ist.

5. Wabenstruktur nach Anspruch 4, wobei der Klebstoff ein Strukturschaum ist.

6. Wabenstruktur nach Anspruch 5, wobei der Strukturschaum ein epoxyhaltiges Material ist.

7. Verfahren zur Befestigung einer Komponente an einer Wabenstruktur, umfassend Bilden eines Hohlraums in der Wabenstruktur, Platzieren eines Einsatzes, der ausgestaltet ist, um die Befestigung der Komponente an der Wabenstruktur in dem Hohlraum zu ermöglichen, wobei der Einsatz einen schäumbaren Klebstoff trägt, der durch Wärme aktivierbar ist, und Aktivieren des Klebstoffs durch Erwärmen, um Schäumen und Binden des Einsatzes an den Innenwänden des Hohlraums herbeizuführen, und Befestigen der Komponente an dem Einsatz.

8. Verfahren nach Anspruch 7, wobei der Klebstoff bei Raumtemperatur berührtrocken und nicht klebrig ist.

9. Verfahren nach Anspruch 7 oder Anspruch 8, wobei der Einsatz vor dem Platzieren in dem Hohlraum bei einer Temperatur im Bereich von -18 °C bis 10 °C gelagert wird.

10. Verfahren nach einem der Ansprüche 7 bis 9, wobei der Einsatz mit einer lösbaren Abdeckung ausgestattet ist, die entfernt wird, um Befestigung der Komponente an dem Einsatz zu ermöglichen.

## Revendications

1. Structure en nid d'abeilles contenant une pièce rapportée à l'intérieur d'une cavité formée dans la structure en nid d'abeilles et adaptée pour permettre la fixation d'un composant à la structure en nid d'abeilles, la pièce rapportée étant attachée aux parois intérieures de la cavité dans la structure en nid d'abeilles par une mousse libérée par un adhésif thermocollant disposé sur la pièce rapportée.

2. Structure en nid d'abeilles selon la revendication 1 dans laquelle la pièce rapportée est pourvue d'un couvercle amovible ou d'une fixation.

3. Structure en nid d'abeilles selon la revendication 1 ou la revendication 2 dans laquelle la pièce rapportée a un alésage fileté.

4. Structure en nid d'abeilles selon l'une quelconque des revendications précédentes dans laquelle l'adhésif est un thermoplastique, un thermodurcissable ou un mélange de ceux-ci.

5. Structure en nid d'abeilles selon la revendication 4 dans laquelle l'adhésif est une mousse structurée.

6. Structure en nid d'abeilles selon la revendication 5 dans laquelle la mousse structurée est un matériau contenant de l'époxy.

7. Procédé de fixation d'un composant à une structure en nid d'abeilles comprenant les étapes consistant à former une cavité dans la structure en nid d'abeilles, placer une pièce rapportée adaptée pour permettre la fixation du composant à la structure en nid d'abeilles à l'intérieur de la cavité, ladite pièce rapportée portant un adhésif expansible thermocollant, et activer l'adhésif par chauffage pour faire mousser l'adhésif et coller la pièce rapportée aux parois intérieures de la cavité et fixer le composant à la pièce rapportée.

8. Procédé selon la revendication 7 dans lequel l'adhésif est sec au toucher et non collant à température ambiante.

9. Procédé selon la revendication 7 ou la revendication 8 dans lequel, avant de placer la pièce rapportée dans la cavité, elle est stockée à une température dans la gamme de -18 °C à 10 °C.

10. Procédé selon l'une quelconque des revendications 7 à 9 dans lequel la pièce rapportée est pourvue d'un couvercle amovible qui est retiré pour permettre la fixation du composant à la pièce rapportée.
